# EUROPEAN PATENT APPLICATION

(11) **EP 3 557 379 A1**
(43) Date of publication of application: **23.10.2019**
(21) Application number: 19169518.8
(22) Date of filing: 16.04.2019
(51) Int. Cl.: G06F 3/01, G06F 3/0481

(54) **SYSTEMS, DEVICES AND METHODS FOR PROVIDING IMMERSIVE REALITY INTERFACE MODES**

(30) Priority: 20.04.2018 US 201815958617
(71) Applicant: Immersion Corporation, San Jose, CA 95134 (US)
(72) Inventor: ARAKI, Satoshi, Redwood City 94061 California (US); RIHN, William S., San Jose 95124 California (US); ATTARI, Sanya, Fremont 94539 California (US); BIRNBAUM, David M., Oakland 94607 California (US)
(74) Representative: Hofstetter, Schurack & Partner

(57) **Abstract**

Systems, devices, and methods for providing immersive reality interface modes are disclosed. The devices include haptic actuators, a computing unit, a gesture detection system, and an immersive reality display device. The gesture detection system detects gestures made by a user during interaction with an immersive realty environment, which is displayed by the immersive reality display device. The computing unit generates and operates an interface mode by which the user can interact, through gestures, with the immersive reality environment and coordinates the provision of haptic, visual, and audio outputs.

## Description

### FIELD OF THE INVENTION

Embodiments hereof relate to systems, devices and methods for providing interface modes for performing actions in immersive reality environments. In particular, embodiments hereof provide haptic and visual cues and indicators to facilitate and improve interactions with immersive reality environments.

### BACKGROUND OF THE INVENTION

Immersive reality environments, including augmented reality, mixed reality, merged reality, and virtual reality, are increasing in popularity and use. The modes and systems within which users interact with these environments are not standardized and are often clumsy and non-intuitive and rely on visual and audio feedback. The inadequacy of existing interface modes limits the use and appeal of interactive immersive reality systems.

These and other drawbacks exist with conventional interactive immersive reality systems. These drawbacks are addressed by the inventions described herein.

### BRIEF SUMMARY OF THE INVENTION

Embodiments of the invention include systems configured to generate varying interface modes to facilitate and improve user interaction with immersive reality environments. The interface modes provided are specifically configured for ease of interaction and for training human users to interact with the interface modes through gestures that are easily trained and stored in muscle memory. The interface modes are aided by the provision of haptic, visual, and audio feedback to provide users with a full sensory experience during interaction with the interface modes discussed herein. The systems further include one or more of an immersive reality display, one or more haptic output devices, and one or more gesture detection systems. The gesture detection systems are used to capture gestures made by the user. The immersive reality display and the haptic output devices are used to provide visual and haptic feedback, respectively. Audio outputs may further be included as a standalone device or as an additional feature of any of the other described devices.

A computing unit of the system provides interface modes that can be accessed by the user based on an initiation gesture. During interaction, the haptic output devices provide haptic feedback to guide the user through the interface mode by "feel." The haptic output assists a user in learning the appropriate gestures to work with the interface mode without requiring full reliance on visuospatial skills in the immersive reality environment.

In an embodiment, a system for providing haptic effects during an immersive reality interaction is provided. The system comprises at least one sensor configured to detect user gesture information, at least one haptic output device configured to provide a haptic effect to the user, an immersive reality display device, and at least one processor. The at least one processor is configured to receive the user gesture information, determine an initiation gesture from the gesture information, activate an interface mode according to the initiation gesture, the interface mode including an interactive visual display provided via the immersive reality display device, anchor the interface mode according to a location of the initiation gesture, determine an interaction gesture from the user gesture information, provide a dynamic haptic effect in response to the interaction gesture, determine a selection gesture from the gesture information, determine a selection haptic effect in response to the selection gesture, and provide a selection visual display via the immersive reality display device.

In an embodiment, a computer-implemented method of providing haptic effects during an immersive reality interaction is provided. The method comprises detecting user gesture information by at least one sensor, providing an immersive reality display via an immersive reality display device, receiving, by at least one processor, the user gesture information, determining, by the at least one processor, an initiation gesture from the gesture information, activating, by the at least one processor, an interface mode according to the initiation gesture, the interface mode including an interactive visual display provided via the immersive reality display device, anchoring, by the at least one processor, the interface mode according to a location of the initiation gesture, determining, by the at least one processor, an interaction gesture from the user gesture information, providing, a dynamic, static, or discrete haptic effects by at least one haptic output device in response to the interaction gesture, determining, by the at least one processor, a selection gesture from the gesture information, determining, by the at least one processor, a selection haptic effect in response to the selection gesture, delivering the selection haptic effect by the at least one haptic output device, and providing a selection visual display by the immersive reality display device.

### BRIEF DESCRIPTION OF THE DRAWINGS

The foregoing and other features and advantages of the invention will be apparent from the following description of embodiments hereof as illustrated in the accompanying drawings. The accompanying drawings, which are incorporated herein and form a part of the specification, further serve to explain the principles of the invention and to enable a person skilled in the pertinent art to make and use the invention. The drawings are not to scale.
FIG. 1 illustrates a system providing immersive reality interface modes consistent with embodiments hereof.
FIG. 2 is a schematic of a system for providing immersive reality interface modes consistent with embodiments hereof.
FIGS. 3A-3C illustrate an example layer cake interface mode according to an embodiment hereof.
FIGS. 4A-4C illustrate an example quick action interface mode according to an embodiment hereof.
FIGS. 5A-5D illustrate an example pivoting interface mode according to an embodiment hereof.
FIGS. 6A-6C illustrate an example slide-out interface mode according to an embodiment hereof.
FIGS. 7A-7C illustrate an example proportional interface mode according to an embodiment hereof.
FIGS. 8A-8F illustrate a linear menuing interface mode according to an embodiment hereof.
FIG. 9 illustrates an example virtual object grasping interface mode according to an embodiment hereof.
FIG. 10 illustrates an example interface mode consistent with embodiments hereof.

### DETAILED DESCRIPTION OF THE INVENTION

Specific embodiments of the present invention are now described with reference to the figures. The following detailed description is merely exemplary in nature and is not intended to limit the invention or the application and uses of the invention. Furthermore, there is no intention to be bound by any expressed or implied theory presented in the preceding technical field, background, brief summary or the following detailed description.

Embodiments of the present invention are directed to immersive reality interface modes involving mixed visual and haptic effects. Immersive reality, as used herein, describes visual display systems that provide altered reality viewing to a user. Immersive reality environments include virtual reality environments, augmented reality environments, mixed reality environments, and merged reality environments, as well as other similar visual environments. Immersive reality environments are designed to provide visual display environments that mimic a realistic viewing experience and include panoramic imaging where a user's movements determine the display. As a user turns their head or body, the images displayed to the user are adjusted as if the user were inside the immersive reality environment. Immersive reality environments frequently include stereoscopic or other three-dimensional imaging technologies to improve realism. Immersive reality environments may include any mix of real and virtual objects that may or may not interact with one another.

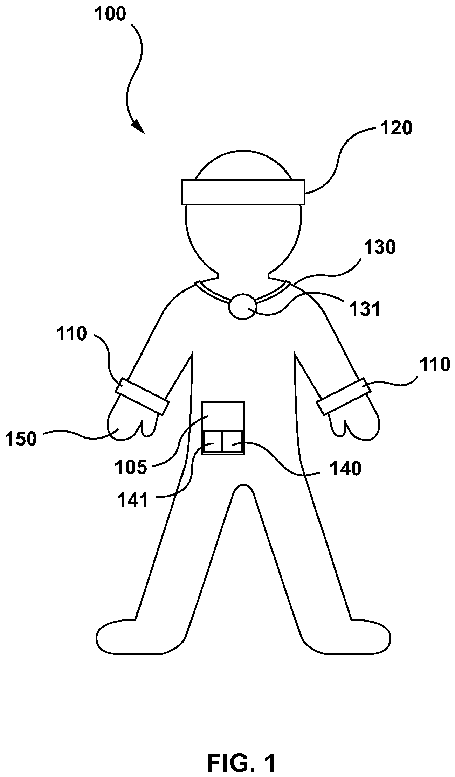

FIG. 1 illustrates a system 100 for providing interface modes to a user of an immersive reality environment. As illustrated in FIG. 1, the system 100 includes haptic output devices 110, an immersive reality display device 120, a gesture detection system 130 including at least one sensor 131, and a computing unit 105 including at least one processor 140. In other systems, one or more than two haptic output device(s) may be provided without departing from the scope hereof.

When engaged in immersive reality environments, users may interact with the environment via various means. Users may operate control devices, such as joysticks and other objects that provide input to the immersive reality environment through buttons, triggers, and/or keys on the objects. Users may also interact with the environment through gestures. Gesture interactions may be performed with the hands, fingers, or other body parts and may be aided by wearable devices such as gloves, wristbands, and other items as well as handheld devices such as wands or other handheld tracking devices

Gesture interaction may be facilitated via the gesture detection system 130. The gesture detection system 130 uses one or more sensors 131 to capture information related to movement and positioning of a gesture entity 150. The gesture entity 150 is the object or body part employed by the user to perform gestures recognizable by the system. The gesture entity 150 may be a physical hand-held object, such as a wand or controller. The gesture entity 150 may be a wearable device, such as a glove, a ring, a wrist-band, a watch, or any other wearable device that may be trackable. Finally, the gesture entity 150 may be the user's body parts, such as their hands or fingers. When a user's body parts function as the gesture entity 150, tracking by the gesture detection system 130 may be augmented by attachments, as further described below. In embodiments, the gesture entity 150 may include multiple gesture entities 150 - e.g., both hands, a hand and an object, etc.

The gesture detection system 130 includes one or more sensors 131 to track movement and positioning of the gesture entity 150. The sensors 131 may include any device or technology capable of tracking movement and location. For example, the sensors 131 may include imaging technologies such as cameras and infrared detectors. In these embodiments, the gesture entity 150 may include attachments that stand out to the imaging technology and facilitate tracking. The sensors 131 may further include lidar, radar, and ultrasound detection sensors. In such embodiments, the gesture entity 150 may include attachments configured to increase reflectivity. The sensors 131 may further include devices that generate electromagnetic fields and detect movement within the fields based on changes in the field. In such embodiments, the gesture entities 150 may include attachments, such as magnets or circuits that increase disturbances to the electromagnetic fields. The sensors 131 may further include devices designed to transmit wireless signals to antennas attached to the gesture entity 150 and determine positioning and movement via triangulation. The sensors 131 may further include inertial sensors, such as accelerometers, attached to the gesture entity 150. In embodiments, the sensors 131 may include any combination of the above-described sensors.

In embodiments, the gesture detection system 130 is a wearable system, designed to be attached to the user. The gesture detection system 130, may, for example, be coupled to or integrated with a wearable device that also includes the haptic output devices. The gesture detection system 130 may also be coupled to or integrated with an immersive reality display device 120.

In embodiments, the gesture detection system 130 may be a stationary system. In embodiments, the gesture detection system 130 may be room sized and configured to detect motion and positioning of the gesture entity 150 anywhere within the confines of a room. In embodiments, the gesture detection system 130 may be desktop sized and configured to detect motion and positioning of the gesture entity 150 within the confines of a workstation or cubicle.

The foregoing are merely examples of technology that the gesture detection system 130 may employ and is not exclusive or exhaustive. The gesture detection system 130 may include any technology capable of detecting the location and movement of an object or body part designated as a gesture entity 150.

The gesture detection system 130 may provide raw data to the computing unit 105 of the system 100, and or may include one or more processors capable of processing captured information before providing the captured information to the computing unit 105.

Immersive reality environments require the display of an immersive reality to a user. Immersive reality display devices 120 include headsets, glasses, contact lenses and other display technologies configured for virtual, augmented and/or mixed reality display. Immersive reality display devices 120 may also include projection devices configured to project images in the air, onto surfaces, or directly into a user's eyes. Immersive reality display devices 120 may be small and portable, i.e., capable of being worn, and/or may be larger and stationary. In further embodiments, immersive reality display devices 120 may interact directly with a user's optic nerves or other neurological structures to provide the required visual display.

The system 100 further includes at least one haptic output device 110. In embodiments, one or more haptic output devices 110 may be provided in wearable haptic devices configured to provide haptic effects to one or more body parts of a user. Wearable haptic devices compatible with the system 100 include bracelets, rings, gloves, finger-nail attachments, finger-tip attachments, and any other haptically enabled devices that may provide a haptic effect to the body. The one or more haptic output devices 110 may also be provided in handheld haptically enabled devices, such as tablet computers, smart-phones, PDAs, game controllers, and any other haptically enabled device sized and shaped for being held. Throughout the description herein, the one or more haptic output devices 110 may be referred to in the singular for convenience sake. It is understood that any effect discussed herein as provided by a haptic output device 110 may also be provided by multiple haptic output devices 110.

Possible haptic output devices 110 include but are not limited to eccentric rotating mass ("ERM") actuators in which an eccentric mass is moved by a motor, linear resonant actuators ("LRAs") in which a mass attached to a spring is driven back and forth, piezoelectric actuators, electromagnetic motors in which an eccentric mass is moved by a motor, vibrotactile actuators, inertial actuators, shape memory alloys, electro-active polymers that deform in response to signals, mechanisms for changing stiffness, electrostatic friction (ESF), ultrasonic surface friction (USF), any other actuator known in the art, and/or any combination of actuators described above.

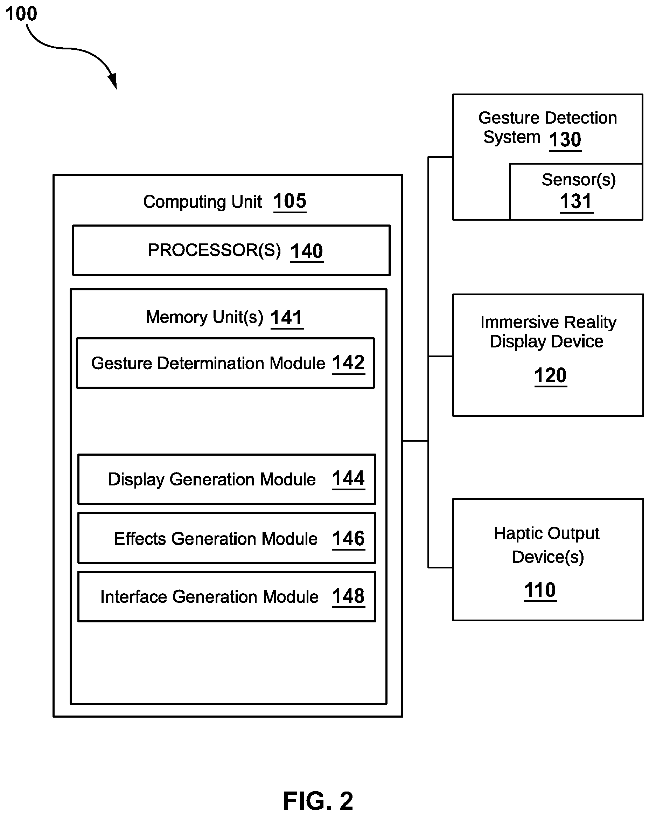

With reference to FIG. 2, the system 100 further includes a computing unit 105 including at least one processor 140 and at least one memory unit 141. The at least one processor 140 is configured to access the at least one memory unit 141 and operate software modules to provide various aspects of the system 100. The at least one processor 140 is configured to operate, via the execution of software instructions, immersive reality interface modes, as described in greater detail below. The at least one processor 140 is further configured to interface with and operate all aspects of the system 100. For example, the at least one processor 140 is configured to generate and display, via the immersive reality display device 120, an immersive reality environment. The at least one processor 140 is configured to interface with and operate the various sensors 131 of the gesture detection system 130. The at least one processor is further configured to interface with and cause the activation of the one or more haptic output devices 110.

The at least one processor 140 (also interchangeably referred to herein as processors 140, processor(s) 140, or processor 140 for convenience) functions as part of the computing unit or computer 105 including at least one memory unit 141, and/or other components. The processor 140 is programmed by one or more computer program instructions stored on the memory unit 141. As shown in FIG. 2, for example, the processor 140 is programmed by a gesture determination module 142, a display generation module 144, an effects generation module 146, and an interface generation module 148. The processor 140 is further programmed by one or more software applications. As used herein, for convenience, the various instruction modules and systems will be described as performing an operation, when, in fact, the modules and systems program the processor 140 to perform the operation. The software modules described herein are by way of example only and all aspects of the system may be performed in software by modules assigned different capabilities and/or responsibilities.

The processor 140 may be configured as part of a server (e.g., having one or more server blades, processors, etc.), a personal computer (e.g., a desktop computer, a laptop computer, etc.), a smartphone, a tablet computing device, a wearable haptic device and/or any other device that may be programmed to carry out aspects of the system as described herein. Although often described herein as a singular processor 140 for convenience sake, the at least one processor 140 may include several processors, each configured to carry out various aspects of the system. Where multiple processors 140 are employed, the multiple processors 140 of the system 100 may each be associated with different hardware aspects of the system, may be housed together or separately, and/or may be in communication with any one or more of the other multiple processors 140.

For example, in an embodiment, the computing unit 105 may house one or more processors 140 in a single computer that are in communication with the immersive reality display device 120, the haptic output devices 110, and the gesture detection system 130. In this embodiment, the processors 140 generate the visuals for the immersive reality display device 130, generate the haptic output signals for the haptic output devices 110, and receive and interpret information from the gesture detection system 130. The processors 140 act as a central hub to operate the entire system 100 and are also configured to generate and operate the immersive reality interface modes. In this embodiment, the various hardware aspects of the system act as peripherals of the central computing unit 105. For example, a user may carry a tablet computer or smartphone configured to run application software. In this embodiment, the tablet computer or smartphone outputs audiovisual data to the immersive reality display device 120, haptic command signals to the haptic output devices 110, and receives raw gesture information from the gesture detection system 130.

In another embodiment, each of the immersive reality display device 120, the haptic output devices 110, and the gesture detection system 130 have an associated one or more processors 140 configured to carry out the necessary tasks to operate the respective hardware. Each of these systems has standalone capabilities and is configured to receive high-level instructions from a processor 140 configured to operate the interface mode and coordinate the information flow and actions of the hardware devices. The processor 140 may be one of the processors 140 associated with the hardware units and/or may be an additional processor 140 housed in an additional device.

In another embodiment, the computing unit 105 is configured with processor 140 to carry out all of the actions described herein to create an interface mode. The computing unit 105 may further be configured to determine the capabilities of any immersive reality display device 120, haptic output device 110, and gesture detection system 130 to which it is connected. The computing unit 105 is further configured to adjust aspects of the generated interface modes so as to fully take advantage of the hardware capabilities without suffering any loss of functionality. Thus, the computing unit 105 is configured to generate and operate interface modes as discussed herein with third party peripheral hardware devices.

Various other configurations of hardware and allocations of processing duties exist between one or more processors 140 located in various places among the hardware devices of the system 100. The specific examples provided herein are not intended to limit the implementation of the immersive reality interface modes as discussed herein.

FIG. 2 is a schematic of the system 100 for providing immersive reality interface modes. As shown in FIG. 2, system 100 includes at least one haptic output device 110, an immersive reality display device 120, a gesture detection system 130 including at least one sensor 131, and at least one processor 140. The at least one processor 140 is in communication with at least one memory unit(s) 141, on which software instructions for operating immersive reality interface modes are stored. The software instructions include at least a gesture determination module 142, a display generation module 144, an effects generation module 146, and an interface generation module 148. Additionally, the processor 140 is configured to run software instructions for implementing a variety of user applications, including productivity applications, communications applications, gaming applications, and others. The processor 140 is configured to operate software applications in conjunction with the immersive reality interface modes, and thus provide the functionality of the immersive reality interface modes to operations within the software applications.

The gesture determination module 142 is a software module in operation on processor 140. The gesture determination module 142 is configured to receive user gesture information from the gesture detection system 130. As discussed above, the gesture detection system 130 includes one or more sensors 131 configured to capture gestures or movements of a user made by a gesture entity 150. The gesture entity 150 includes any body part or device which a user may use to perform gestures including fingers and hands, active handheld devices such as controllers or wands, and passive handheld devices such as pens, pencils, pointers, and other objects. The user gesture information received by the gesture determination module 142 may include raw or processed data as captured by the sensors 131. In an embodiment, user gesture information is the raw data captured by the sensors 131 and is transmitted directly to the gesture determination module 142 for interpretation. In further embodiments, the gesture detection system 130 refines the data captured by the sensors 131 to provide processed user gesture information to the gesture determination module 142. Processed user gesture information may include information at various levels of abstraction from the raw data. For example, processed user gesture information may include information describing the movements of the gesture entity 150. In another example, the processed gesture information may include information matching the movements of the gesture entity 150 to specific identifiable gestures.

The gesture determination module 142 is configured to detect and classify identifiable gestures based on the user gesture information received. Identifiable gestures detectable by the gesture determination module 142 include at least initiation gestures, interaction gestures, selection gestures, holding gestures, and closing gestures. Initiation gestures are movements of the gesture entity 150 selected to initiate an interface mode within an immersive reality environment. Interaction gestures are movements of the gesture entity 150 used for interaction and navigation within an interface mode. Selection gestures are movements of the gesture entity 150 used for selecting options or elements within an interface mode and, in some embodiments, gestures used for exiting an interface mode. Holding gestures are movements of the gesture entity 150 used for freezing an aspect of an interface mode. Closing gestures are gestures used for exiting an interface mode. Examples of each of these gestures are provided in greater detail below.

Display generation module 144 is a software module in operation on the processor 140. The display generation module 144 is configured to provide an interactive visual display of an interface mode to the user via the immersive reality display device 120. The interactive visual display includes at least an interactive option display and a selection visual display. The interactive option display presents a user with one or more selectable or adjustable objects while the selection visual display provides a user with visual confirmation that an object has been selected or adjusted.

The display generation module 144 is also configured to anchor the interactive visual display based on the interface mode that is initiated. For example, in some interface mode embodiments, the interactive visual display may be anchored to a specific location or fixed position within the immersive reality environment according to a location at which the initiation gesture is made. After initiation of an interface mode via a detected initiation gesture, the associated interactive visual display is anchored at a location within the environment associated with the initiation gesture. As the user rotates their vision or moves around in the environment, the interactive visual display remains anchored to the original location and thus may pass from the user's view. In embodiments, the interactive visual display may be persistently anchored, permitting the user to leave the area, log out of the system and/or perform other tasks while the interactive visual display remains anchored in place. In another interface mode embodiment, the interactive visual display may be anchored to a specific location within a user's field of view. As the user moves through the environment and rotates their view, the anchored interactive visual display follows their movements, always remaining in the same portion of the user's field of view. In another interface mode embodiment, the interactive visual display is anchored to an anchor object, physical or virtual, within the immersive reality environment. For example, an initiation gesture may cause the interactive visual display to be anchored to a real or virtual book. As the user moves the book around within the environment, the interactive visual display moves with the book. In embodiments, an interactive visual display instantiated by one user may be visible to other users that are interacting with the same immersive reality environment. In embodiments, an interactive visual display instantiated by one user may be private to the initiating user.

The effects generation module 146 is a software module in operation on the processor 140. The effects generation module 146 is configured to cause the output of haptic command signals from the computing unit 105 to cause haptic effects in the one or more haptic output devices 110 associated with the system 100. The output haptic command signals may be command signals configured to cause a power system associated with the haptic output devices 110 to provide the appropriate electrical signal to drive a haptic output device 110. The output haptic command signals may also include direct drive signals configured to drive a haptic output device 110 with no requirement for an intervening power system.

The effects generation module 146 is configured to cause the output of haptic command signals to provide at least initiation haptic effects, dynamic haptic effects, and selection haptic effects. The initiation haptic effects are configured to provide a user with confirmation that an interface mode has been initiated. The dynamic haptic effects are configured to provide various sensations to a user to facilitate the use and navigation of an interface mode. The selection haptic effects are configured to provide a user with confirmation that a selection within an interface mode has been made. In embodiments, the initiation haptic effects and the selection haptic effects are discrete effects delivered over a short period of time to emphasize or confirm an occurrence. The dynamic haptic effects, in contrast, are on-going effects that vary to provide haptic perceptions during an interaction with the interface mode. Greater detail regarding the various haptic effects are provided below.

The interface generation module 148 is a software module in operation on the processor 140. The interface generation module 148 operates to generate the interface mode and to coordinate the actions of the gesture determination module 142, the display generation module 144, and the effects generation module 146. The interface generation module 148 further interacts with software applications operating on the system 100 for which interface modes are provided. When an interface mode is provided by the interface generation module 148, it permits the user to select options, adjust parameters, and otherwise interact with a software application operating on the system 100.

The interface generation module 148 receives information about determined or recognized gestures from the gesture determination module 142 and outputs commands to the display generation module 144 to provide the interactive visual display and to the effects generation module 146 to provide the haptic effects.

In response to an initiation gesture of the gesture entity 150 detected in the gesture information by the gesture determination module 142, the interface generation module 148 activates an interface mode associated with the detected initiation gesture. The interface mode is provided to allow the user to interact with a software application operating on the system 100. The interface mode permits the users to adjust parameters, select options, and perform other actions associated with the software application. The interface generation module 148 causes the display generation module 144 to provide an interactive visual display of the interface mode via the immersive reality display device 120. In embodiments, the interface generation module 148 causes the effects generation module 146 to cause the output of an initiation haptic effect via the haptic output devices 110. As discussed above, the interactive visual display of the interface mode may be anchored to a physical or virtual object, to a point in the immersive reality environment, or to a point in the user's field of vision within the immersive reality environment. For example, a user may clench a fist to initiate a particular interface mode. The user's hands are the gesture entity 150 in this embodiment. The clenched fist is captured by the gesture detection system 130 and determined as an initiation gesture by the gesture determination module 142. The interface generation module 148 activates an interface mode associated with the clenched fist gesture and causes the display generation module 144 to provide an interactive visual display within the immersive reality environment. Upon clenching a fist, the user may receive a brief haptic sensation as an initiation haptic effect via the haptic output device 110 as confirmation that the gesture has been interpreted by the system 100 as an initiation gesture. The interactive visual display is created and anchored at a location near the user's clenched fist. If the user turns his/her head or moves the clenched fist, the interactive visual display remains in place. The user now interacts with the interactive visual display of the interface mode.

In embodiments, the initiation gesture may involve two actions. For example, a first action may cause display of the interactive visual display while a second action may cause the anchoring of the interactive visual display and activation of the interface mode. For example, a clenched fist may be a first initiation gesture. In response to a determination of the first initiation gesture, the interface generation module 148 causes display of the interactive visual display. The user may then move their clenched fist through the immersive reality environment to a location where they wish to anchor the display. Opening the clenched fist to a flat hand may be a second initiation gesture. In response to a determination of the second initiation gesture, the interface generation module 148 may anchor the interactive visual display at the location of the hand during the second initiation gesture and activate the interface mode. A two-part initiation gesture system may permit the user to quickly peruse menu options without entering the interface mode, i.e., by only performing the first initiation gesture and not the second initiation gesture mode. The two-part initiation gesture system may also permit a user to see the size and shape of a menu before determining where they wish to anchor it.

In response to one or more interaction gestures detected in the gesture information by the gesture determination module 146, the interface generation module 148 causes the display generation module 144 to provide an interactive visual display of selectable or adjustable options, navigational actions, or menu items associated with the detected interaction gestures. For example, movement of the user's hand, either rotationally or translationally, causes a cursor or other visual selection object to move through the interactive visual display. While navigating the interactive visual display, the user's visuospatial understanding of the interactive visual display is augmented by dynamic haptic effects provided by the effects generation module 146. For example, as the cursor nears a selectable object or item within the interactive visual display, a haptic effect grows in intensity, by increasing at least one of a frequency and a magnitude. In another example, the haptic effect is tuned to provide a sensation of greater resistance as a cursor nears a selectable object. When the cursor is appropriately focused on a selectable object, the effects generation module 146 provides a selection haptic effect via the haptic output device 110 to indicate to the user that a selectable object is highlighted or ready for selection in the interactive visual display. By providing dynamic haptic effects and triggered selection haptic effects during navigation of the interactive visual display, a user can navigate through the interface mode by feel as well as by sight and can develop familiarity and facility with the interface mode quickly.

After locating a cursor appropriately over the desired selectable object, the user performs a selection gesture with the gesture entity 150. The gesture determination module 142 determines the selection gesture in the gesture information received from the gesture detection system 130. The interface generation module 148 receives information that the selection gesture was performed. In response to the selection gesture, the interface generation module 148 provides information about the object selection to the software application operating on the system 100 associated with the activated interface mode. Further in response to the selection gesture, the interface generation module deactivates the interface mode and causes the effects generation module 146 to provide the user with a selection haptic effect, via the haptic output device 110, as confirmation that the selection gesture was recognized and accepted. In embodiments, the selection gesture may be a release of the initiation gesture, e.g., the opening of the clenched fist that initiated the interface mode. In embodiments, the selection gesture may be a lack of movement of the gesture entity, e.g., the user may hold the gesture entity still for a period of time to indicate selection.

In an embodiment, a simple interface mode for adjusting a volume of audio associated with a running software application may operate as follows. The user performs an initiation gesture of pinching a thumb to tips of his/her index and middle fingers as if grasping a dial. The interface generation module 148 recognizes the initiation gesture, outputs a brief haptic effect to confirm, and causes the image of a volume dial to appear between the user's pinched fingers. The user quickly rotates their hand to "turn" the virtual volume dial while receiving dynamic haptic effects in the form of clicks each time the volume is increased or decreased by one level. When satisfied, the user releases their pinched fingers, receives a selection haptic effect to confirm, and the volume dial disappears. This simple interaction can easily become part of a user's muscle memory, aided by the repeatable gestures and haptic effects. A change in volume becomes an action performed in less than a second and with very little thought or attention diverted from a main task or action that the user may be performing.

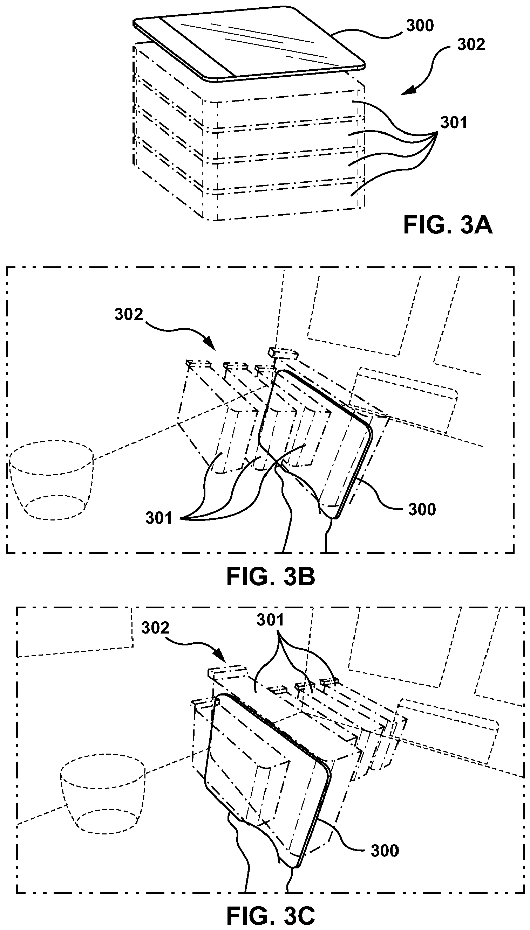

FIGS. 3A-3C illustrate an example layer cake interface mode. In the layer cake interface mode, a tablet computer, peripheral device, or smartphone serves as the gesture entity 300. The initiation gesture is a tilting of the gesture entity 300 when the gesture entity 300 is positioned with a narrow end facing the user and a screen of the gesture entity 300 facing substantially perpendicular to the user's line of sight. The tilting gesture rotates the gesture entity 300 from an original position or orientation to a rotated position or orientation. When the initiation gesture is determined by the gesture determination module 142, the layer cake interface mode is launched by the interface generation module 148. In the interactive visual display 302 of the layer cake interface mode, several layered (virtually stacked) selectable visual display objects 301 extend from the gesture entity 300, like a layer cake. The interactive visual display 302 is anchored within the immersive reality environment at the location at which the interactive visual display 302 was initially displayed upon activation. The gesture determination module 142 recognizes movement of the gesture entity 300 from the anchored location through the different layered selectable visual display objects 301 as an interaction gesture and the effects generation module 146 provides dynamic haptic effects to simulate moving the gesture entity 300 through a substance as the gesture entity 300 virtually moves through each layer. In embodiments, when gesture entity 300 has navigated to the end of the stack of selectable objects 301, further movement of the gesture entity 300 is unnecessary, and the stack of selectable objects will begin to scroll past the gesture entity 300. In an embodiment, positioning of the gesture entity 300 may control the speed of the scrolling. For example, if the gesture entity 300 is extended far past an end of the stack of selectable objects 301, scrolling may occur at a higher rate. If the gesture entity 300 is extended only slightly past the end of the stack of selectable objects 301, scrolling may occur at a slower rate. In further embodiments, the speed of scrolling may be controlled by an amount of pressure applied to a button or touchscreen of the gesture entity 300. When the gesture entity 300 has navigated to a selectable visual display object 301, that object may be highlighted visually, as shown in FIGS. 3B and 3C, within the interactive visual display and/or the effects generation module 146 may provide a selection haptic effect via the haptic device 110. The gesture determination module 142 recognizes a tilting of the gesture entity 300 back to the original position or orientation as a selection gesture. In response to the determination of the selection gesture, the interface generation module 148 recognizes and reports a layer or object selection to application software. The interface generation module 148 deactivates layer cake interface mode and causes the display generation module 144 to cease display of the interactive visual display 302. The effects generation module 146 provides a selection haptic effect as confirmation to the user that a selection has been made. The layer cake interface mode may be useful where a user must select from a large number of items, such as a contact list, file list, or application list.

Alternative embodiments of the layer cake interface mode may be provided. For example, a user's hand may act as gesture entity 300. In further variations, one or both of the selection haptic effects may be eliminated. In further variations, an audible confirmation may accompany one or both of the selection haptic effects. In further variations, a selection gesture may be performed by holding the gesture entity 300 in place for a specific time period. For example, holding the gesture entity 300 in a position to select a specific selectable visual display object 301 for a set period of time, e.g., 3 seconds, may be interpreted as a selection gesture. In another embodiment, the initiation gesture of the layer cake interface mode may be a two-part gesture. A first initiation gesture may be recognized as a tilting of the gesture entity 300, as described above. The first initiation gesture may permit the user to continue moving the gesture entity 300 and the associated interactive visual display 302 before choosing a location in the immersive reality environment to anchor it. After moving the gesture entity 300 to the anchoring location, a second initiation gesture, such as the press of a button on a haptic peripheral constituting the gesture entity 300 or a movement of a specific finger of a hand constituting the gesture entity 300 may be performed. The second initiation gesture may then cause the interface generation module 148 to anchor the interactive visual display 302 at the location the second initiation gesture was made and activate the interface mode.

Any combination of the above variations may also be implemented.

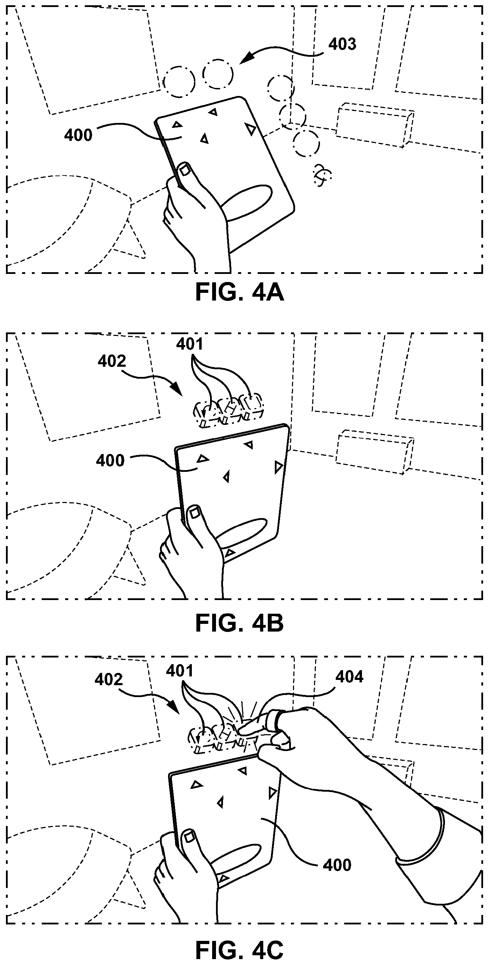

FIGS. 4A-4C illustrate an example quick action interface mode. In the quick action interface mode, a tablet computer or smartphone serves as a first gesture entity 400. A tilting of the first gesture entity 400 towards the user from a position where the screen of the first gesture entity 400 is generally facing the user serves as the initiation gesture. Tilting the gesture entity 400 rotates the first gesture entity 400 from a first position or orientation to a rotated position or orientation. When the initiation gesture is determined by the gesture determination module 142, the quick action interface mode is launched by the interface generation module 148. In the interactive visual display 402 of the quick action interface mode, existing user interface (UI) elements 403 are dismissed and several selectable visual display objects 401 are shown in the interactive visual display 402 surrounding the first gesture entity 400. The interactive visual display 402 may be anchored within the immersive reality environment at the location of initial display and/or may be anchored relative to the first gesture entity 400 as it is moved within the immersive reality environment. The gesture determination module 142 recognizes movement of a second gesture entity 404, for example, a user's finger or a pointing implement held by the user, as the interaction gesture. In embodiments, the effects generation module 146 may provide a dynamic haptic effect as the second gesture entity 404 approaches one of the selectable visual display objects 401. When the second gesture entity 404 has navigated to a selectable visual display object 401, that object may be highlighted visually within the interactive visual display and/or the effects generation module 146 may provide a selection haptic effect via the haptic device 110. The gesture determination module 142 recognizes a tilting of the first gesture entity 400 to return to the original position or orientation as a selection gesture. Thus, a user operating the gesture entity 400 may tilt the gesture entity 400 towards themselves as the initiation gesture and, after selection, return the gesture entity to its original position or orientation as the selection gesture. In response to the determination of the selection gesture, the interface generation module 148 recognizes and reports a visual display object selection to application software. The interface generation module 148 deactivates the quick action interface mode and causes the display generation module 144 to cease display of the interactive visual display 402. The effects generation module 146 provides a second selection haptic effect as confirmation to the user that a selection has been made. The second selection haptic effect may be the same as or different than the first selection haptic effect.

Alternative embodiments of the quick action interface mode may be provided. For example, a user's hand may act as first gesture entity 400 while the user's other hand acts as the second gesture entity 404. In further variations, one or both of the selection haptic effects may be eliminated. In further variations, an audible confirmation may accompany one or both of the selection haptic effects. In another embodiment, the initiation gesture of the quick action interface mode may be a two-part gesture. The first initiation gesture may permit the user to continue moving the gesture entity 400 and the associated interactive visual display 402 before choosing a location in the immersive reality environment to anchor it. After moving the gesture entity 400 to the anchoring location, a second initiation gesture, such as the press of a button on a haptic peripheral constituting the gesture entity 400 or a movement of a specific finger of a hand constituting the gesture entity 400 may be performed. The second initiation gesture may then cause the interface generation module 148 to anchor the interactive visual display 402 at the location the second initiation gesture was made and activate the interface mode. Any combination of the above variations may also be implemented.

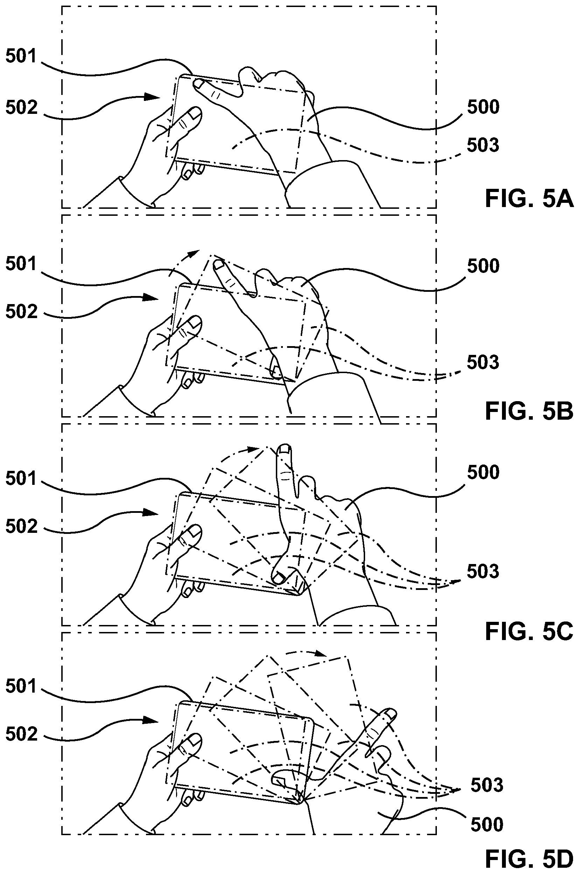

FIGS. 5A-5D illustrate an embodiment of a pivoting interface mode. In the pivoting interface mode, one of the user's hands serves as a gesture entity 500. The initiation gesture is a placement of a thumb of the user's hand on a surface of a physical anchor object 501 at an anchor interaction point when the thumb and index finger of the user's hand are spread apart, as shown in FIG. 5A. The location of the index finger when the thumb is placed at the anchor interaction point is a moveable gesture point. The anchor object 501 may be any physical object, portable or fixed, such as a book, tablet, notepad, desktop, cabinet, etc. The anchor object 501 may also be a virtual object. When the initiation gesture is determined by the gesture determination module 142, the pivoting interface mode is launched by the interface generation module 148. In an interactive visual display 502 of the pivoting interface mode, a deck of stacked images, holograms, or virtual objects as selectable visual display objects 503 are displayed atop the anchor object 501. When first displayed, only the top selectable visual display object 503 is visible. The selectable visual display objects 503 may be sized and shaped similarly to the anchor object 501, may be sized and shaped according to dimensions between the anchor interaction point and the moveable gesture point, or may be sized and shaped according to a standard sizing. The interactive visual display 502 is anchored within the immersive reality environment at the anchor object 501 and moves within the immersive reality environment with the anchor object 501. The gesture determination module recognizes a pivoting motion of the gesture entity 500 around the anchored thumb as an interaction gesture, as illustrated in FIG. 5C. The pivoting motion may be recognized as the moveable gesture point moving in an arc motion with the anchor interaction point as a center of the arc. In embodiments, the effects generation module 146 may provide a dynamic haptic effect as the gesture entity 500 pivots. In response to a pivoting interaction gesture, the interface generation module 148 causes the display generation module 144 to show the top selectable visual display object 503 rotating with the finger of the gesture entity 500 to reveal the next selectable visual display object 503 underneath. Each rotatable image, hologram, or virtual object represents a selectable visual display object 503, and a currently selected visual display object is highlighted or otherwise emphasized in the interactive visual display 502 by the display generation module 144. The currently selected visual display object may switch to the next selectable visual display object 503 in the stack when a higher-level selectable visual display object 503 is rotated out of the way by the pivoting interaction gesture. The user may also "tap" with his/her finger a previously rotated selectable visual display object 503 to designate it as a currently selected visual display object. The effects generation module 146 may provide a selection haptic effect via the haptic device 110 when the currently selected visual display object is switched to another visual display object. The gesture determination module 142 recognizes a release of the anchored thumb from the anchor object 501 or a closing of the fingers of the gesture entity 500 as a selection gesture. In response to the determination of the selection gesture, the interface generation module 148 recognizes and reports a visual display object selection to application software. The interface generation module 148 deactivates the pivoting interface mode and causes the display generation module 144 to cease display of the interactive visual display 502. The effects generation module 146 provides a second selection haptic effect as confirmation to the user that a selection has been made. The second selection haptic effect may be the same as or different than the first selection haptic effect. In further variations, one or both of the selection haptic effects may be eliminated. In further variations, an audible confirmation may accompany one or both of the selection haptic effects.

Alternative embodiments of the pivoting interface mode may be provided. In an embodiment, for example, a holding gesture of the gesture entity 500 may be recognized as a command to maintain the relative positions of the selectable visual display objects 503 in the interactive visual display 502 even after the gesture entity 500 is removed to do other things. A holding gesture may include, for example, a bending movement of the index finger of the gesture entity 500, which can be made while the thumb of the gesture entity 500 maintains contact with the anchor object 501. Use of a holding gesture permits the user to continue viewing the selectable visual display objects 503 while using his/her hand for other tasks. In an embodiment, as noted above, the anchor object 501 may be a virtual object. In another embodiment, the gesture entity 500 may include a first hand and a second hand of the user. In this two-handed embodiment, placement of the thumb of one hand at an anchor interaction point while the index finger of the other hand is placed at a moveable gesture point serves as the initiation gesture. Pivoting the index finger and the moveable gesture point around the thumb at the anchor interaction point serves as the interface gesture. The pivoting interface mode may be particularly useful in permitting a user to compare one or more visual display objects at the same time. By rotating and spreading or fanning out the selectable visual display objects 503, the user may position them so that more than one is visible at the same time, thus permitting a quick and easy comparison. In further variations, once the holding gesture is determined, the user is free to set the anchor object 501 down or hand it to another user. Any combination of the above variations may also be implemented.

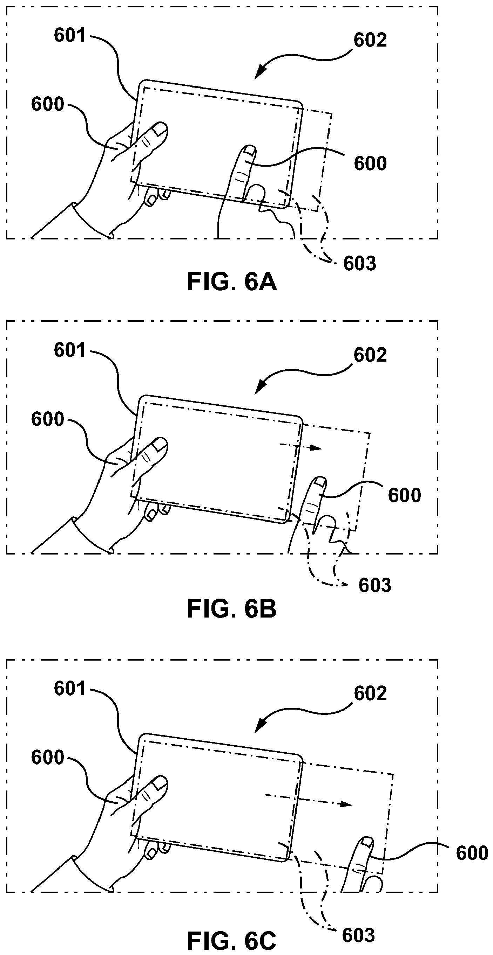

FIGS. 6A-6C illustrate an example slide-out interface mode. In the slide-out interface mode, a user's two hands serve as a gesture entity 600. An initiation gesture is a placement of a thumb of a first hand and an index finger of a second hand on a surface of a physical anchor object 601 as shown in FIG. 6A. The anchor object 601 may be any object, portable or fixed, such as a book, tablet, notepad, desktop, cabinet, etc. In embodiments, the anchor object 601 may be a virtual object. When the initiation gesture is determined by the gesture determination module 142, the slide-out interface mode is launched by the interface generation module 148. In an interactive visual display 602 of the slide-out interface mode, a deck of stacked images, holograms, or virtual objects as selectable visual display objects 605 are displayed atop the anchor object 601. When first displayed, only a top selectable visual display object 605 is visible. The selectable visual display objects 605 may be sized and shaped similarly to the anchor object 601, may be sized and shaped according to dimensions between the thumb of the first hand and the index finger of the second hand, or may be sized and shaped according to a standard sizing. The interactive visual display 602 is anchored within the immersive reality environment at the anchor object 601 and moves within the immersive reality environment with the anchor object 601. The gesture determination module 142 recognizes a laterally-directed sliding motion of the index finger of the second hand of the gesture entity 600 away from the anchored thumb of the first hand of the gesture entity 600 as an interaction gesture, as illustrated in FIGS. 6A-6C. In embodiments, the effects generation module 146 may provide a dynamic haptic effect as the gesture entity 600 provides the sliding interaction gesture. In response to the sliding interaction gesture, the interface generation module 148 causes the display generation module 144 to show a top selectable visual display object 605 sliding with the index finger of the second hand of the gesture entity 600 to reveal the next selectable visual display object 605 in the stack. A currently selected visual display object of the selectable visual display objects 605 is highlighted or otherwise emphasized in the interactive visual display 601 by the display generation module 144. The currently selected visual display object may switch to the next selectable visual display object 605 in the stack when the higher level selectable visual display object 605 is pulled out of the way. The user may also "tap" a previously removed selectable visual display object 605 to designate it as a currently selected visual display object. The effects generation module 146 may provide a selection haptic effect via the haptic device 110 when the currently selected visual display object is switched. The gesture determination module 142 recognizes a release of the anchored thumb of the gesture entity 600 as a selection gesture. In response to the determination of the selection gesture, the interface generation module 148 recognizes and reports a visual display object selection to application software. The interface generation module 148 deactivates the slide-out interface mode and causes the display generation module 144 to cease display of the interactive visual display 601. The effects generation module 146 provides a second selection haptic effect as confirmation to the user that a selection has been made. The second selection haptic effect may be the same as or different than the first. In further variations, one or both of the selection haptic effects may be eliminated. In further variations, an audible confirmation may accompany one or both of the selection haptic effects.

Alternative embodiments of the slide-out interface mode may be provided. For example, a holding gesture of the gesture entity 600 may be recognized as a command to maintain the position of the images in the interactive visual display 601 even after the gesture entity 600 is removed to do other things. The holding gesture may include a bending of the index finger of the second hand of the gesture entity 600, which may be performed while the thumb of the first hand remains anchored. This permits the user to continue viewing the selectable visual display objects 605 while using their hands for other tasks. In further variations, once the holding gesture is determined, the user is free to set the physical anchor object 601 down or hand it to another user. Any combination of the above variations may also be implemented.

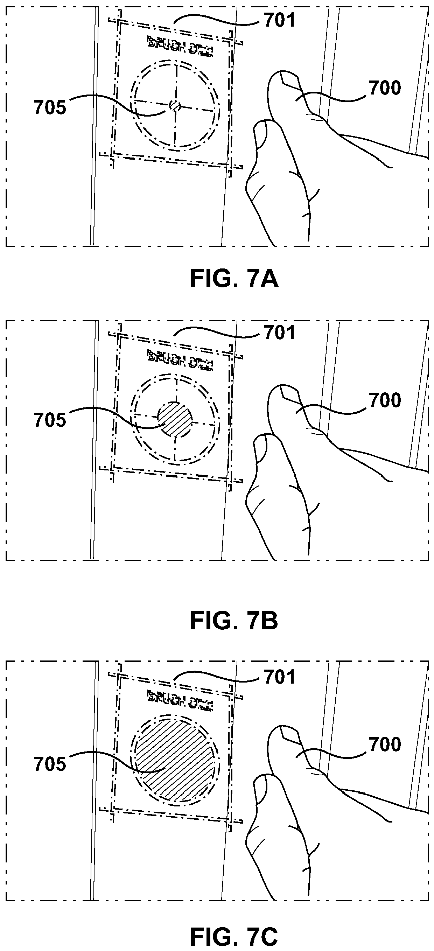

FIGS. 7A-7C illustrate an example proportional interface mode. The proportional interface mode may be valuable for use in any situation where a specific selection value from a selection range of values is selected. In the proportional interface mode, a user's hand serves as a gesture entity 700. An initiation gesture is a placement of a thumb on a neighboring index finger, as shown in FIG. 7A. When the initiation gesture is determined by the gesture determination module 142, the proportional interface mode is launched by the interface generation module 148. In an interactive visual display 701 of the proportional interface mode, an image of a range selection visual display object 705 is displayed. The range selection visual display object 705 is a visual display object showing a range of potential selection values and may include, for example, a dial, a meter, and any other visual representation of a selection range. In FIGS. 7A-7C, the image of the range selection visual display object 705 includes a brush size selection image for a virtual paint brush, where an image of a currently selected brush size is displayed as the selection value. In further embodiments, an image displaying a continuous range of brush sizes may be employed. When first displayed, the currently selected brush size is shown as the selection value. The interactive visual display 701 is anchored within the immersive reality environment at the point of initial display and maintains its position within the immersive reality environment even as the user rotates his/her head or moves within the environment. In further embodiments, the interactive visual display 701 is anchored within a field of vision of the user. The gesture determination module 142 recognizes a sliding motion of the thumb of the hand of the gesture entity 700 against the neighboring index finger of the hand of the gesture entity 700 as the interaction gesture, as illustrated in FIGS. 7B and 7C. Sliding the thumb of the hand of the gesture entity 700 in one direction may increase the selection value within the selection range while sliding the thumb of the hand of the gesture entity 700 in the other direction may decrease the selection value within the selection range. In embodiments, the effects generation module 146 may provide a dynamic haptic effect as the gesture entity 700 provides the sliding interaction gesture. In response to the sliding interaction gesture, the interface generation module 148 causes the display generation module 144 to vary the displayed value within the range of the range selection visual display object 705. In the embodiment of FIGS. 7A-7C, the brush size varies in size, larger and smaller, as the user slides the thumb of the hand of the gesture entity 700 back and forth. The gesture determination module 142 recognizes a release of the thumb from contact against the index finger of the hand of the gesture entity 700 as a selection gesture. In response to the determination of the selection gesture, the interface generation module 148 recognizes and reports the final selection value to the application software. The interface generation module 148 deactivates the proportional interface mode and causes the display generation module 144 to cease display of the interactive visual display 701. The effects generation module 146 provides a selection haptic effect as confirmation to the user that a selection has been made.

Alternative embodiments of the proportional interface mode may be provided. In variations, a selection haptic effect may be provided when the user reaches a limit of the available range. In further variations, an audible confirmation may accompany the selection haptic effects. In another embodiment, the initiation gesture of the proportional interface mode may be a two-part gesture. The first initiation gesture may permit the user to continue moving the gesture entity 700 and the associated interactive visual display 702 before choosing a location in the immersive reality environment to anchor it. After moving the gesture entity 700 to the anchoring location, a second initiation gesture, such as the movement of a specific finger of a hand constituting the gesture entity 700 may be performed. The second initiation gesture may then cause the interface generation module 148 to anchor the interactive visual display 702 at the location the second initiation gesture was made and activate the interface mode. Any combination of the above variations may also be implemented.

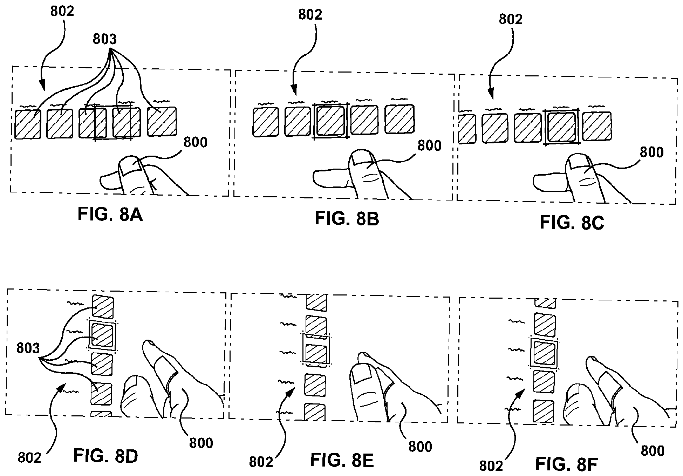

FIGS. 8A-8F illustrate a linear menuing interface mode. In the linear menuing interface mode, a user's hand serves as a gesture entity 800 and resting a thumb of the hand on an index finger of the hand serves as an initiation gesture. When the initiation gesture is determined by the gesture determination module 142, the linear menuing interface mode is launched by the interface generation module 148. In an interactive visual display 802 of the linear menuing interface mode, one or more selectable visual display objects 803 of a virtual menu are displayed in linear fashion, e.g., row or column. In embodiments, a substantially horizontal or vertical positioning of the index finger during the initiation gesture may determine whether the menu opens in a horizontal orientation (FIGS. 8A-8C) or a vertical orientation (FIGS. 8D-8F). The interactive visual display 802 is anchored within the immersive reality environment at the location of initial display and/or may be anchored within a user's field of view within the immersive reality environment. The gesture determination module 142 recognizes movement of the thumb against/along the index finger as an interaction gesture. In response to the interaction gesture, a cursor is moved across the selectable visual display objects 803 to change a currently selected visual display object. In embodiments, the effects generation module 146 may provide a dynamic haptic effect in response to the interaction gesture as the cursor moves. When the cursor has navigated to a new selectable visual display object 803, that object may be highlighted or otherwise emphasized visually within the interactive visual display 802, as shown in FIGS. 8C and 8F, and/or the effects generation module 146 may provide a selection haptic effect via the haptic device 110. The gesture determination module 142 recognizes a release of the thumb from the index finger as a selection gesture, as shown in FIG. 8F. In response to the determination of the selection gesture, the interface generation module 148 recognizes and reports a visual display object selection to application software based on the currently selected one of the selectable visual display objects 803. The interface generation module 148 deactivates the linear menuing interface mode and causes the display generation module 144 to cease display of the interactive visual display 802. The effects generation module 146 provides a second selection haptic effect as confirmation to the user that a selection has been made. The second selection haptic effect may be the same as or different than the first selection haptic effect.

Alternative embodiments of the linear menuing interface mode may be provided. For example, one or both of the selection haptic effects may be eliminated. In another embodiment, the initiation gesture of the quick action interface mode may be a two-part gesture. The first initiation gesture may permit the user to continue moving the gesture entity 800 and the associated interactive visual display 802 before choosing a location in the immersive reality environment to anchor it. After moving the gesture entity 800 to the anchoring location, a second initiation gesture, such as the movement of a specific finger of a hand constituting the gesture entity 800 may be performed. The second initiation gesture may then cause the interface generation module 148 to anchor the interactive visual display 802 at the location the second initiation gesture was made and activate the interface mode. In further variations, an audible confirmation may accompany one or both of the selection haptic effects. Any combination of the above variations may also be implemented.

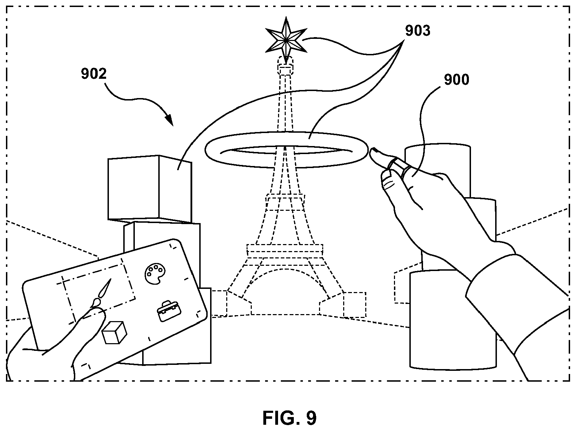

FIG. 9 illustrates an example virtual object grasping interface mode. In the virtual object grasping interface mode, the interface generation module 148 provides an interface mode to facilitate grasping, moving, and otherwise contacting virtual objects. In the virtual object grasping interface mode, a user's hand serves as a gesture entity 900 and splaying all fingers wide as if in preparation to grasp an object serves as an initiation gesture. When the initiation gesture is determined by the gesture determination module 142, the virtual object grasping interface mode is launched by the interface generation module 148. In an interactive visual display 902 of the virtual object grasping interface mode, one or more graspable visual display objects 903 are displayed. The one or more graspable visual display objects 903 are anchored within the immersive reality environment at the location of initial display. In embodiments, the graspable visual display objects 903 may be visible prior to initiation of the virtual object grasping interface mode and the interface mode may serve to facilitate their manipulation. The gesture determination module 142 recognizes movement of the gesture entity 900 as an interaction gesture. In response to the interaction gesture, a dynamic haptic effect is provided by the effects generation module 146 and delivered by the haptic output device 110. The dynamic haptic effect is tuned to alter as a distance between the user's hand and the graspable visual display object 903 changes, either increasing or decreasing. As the user's hand approaches the graspable visual display object 903, the user feels an increase in the intensity of haptic effects provided by the haptic output device, which alerts the user of the increasing proximity. When the user's hand reaches the graspable visual display object 903, the effects generation module 146 provides a selection haptic effect to the user. The selection haptic effect may include, for example, a clicking or abbreviated buzzing sensation. In embodiments, the gesture determination module 142 recognizes a grasping or closing motion of the hand as a selection gesture and provides the selection haptic effect when the graspable virtual display object 903 is grasped. The interface generation module 148 maintains the virtual object grasping interface mode and permits the user to move the graspable visual display object 903 within the interactive visual display 901 with the closed fingers. The virtual object grasping interface mode is ended in response to the determination, by the gesture determination module 142, of a closing gesture. The closing gesture may include, for example, a closed fist or other gesture selected by the user. Alternative embodiments of the virtual object grasping interface mode may be provided. For example, an audible confirmation may accompany the selection haptic effects.

In embodiments, one or more of the various interface modes discussed above may be combined form interface modes of greater complexity. That is, a second interface mode may be initiated based on a selection made in a first interface mode. For example, the layer cake interface mode may be combined with either the pivoting interface mode or the slide-out interface mode. The user may initiate the layer cake interface mode, make a selection, and then launch either the pivoting interface mode or the slide-out interface from the selected visual display object of the layer cake interface mode. Other potential combinations are also within the scope of this description. In embodiments, more than two interface modes may be combined. In this way, multi-level menuing may be provided through a combination of easily navigable interactive visual displays.

In embodiments, the various interaction gestures, selection gestures, holding gestures, and closing gestures, as well as the associated dynamic haptic effects and selection haptic effects are adjustable based on user preferences. A user may alter the gesture required to initiate or interface with any of the above-described interface modes. In embodiments, the system 100 may provide gesture training functionality. Gesture training functionality may be used to train both the user in performing the required gestures and the gesture determination module 142 in recognizing user performed gestures. Machine learning techniques may be applied to user gesture information to improve gesture determination by the gesture determination module 142.

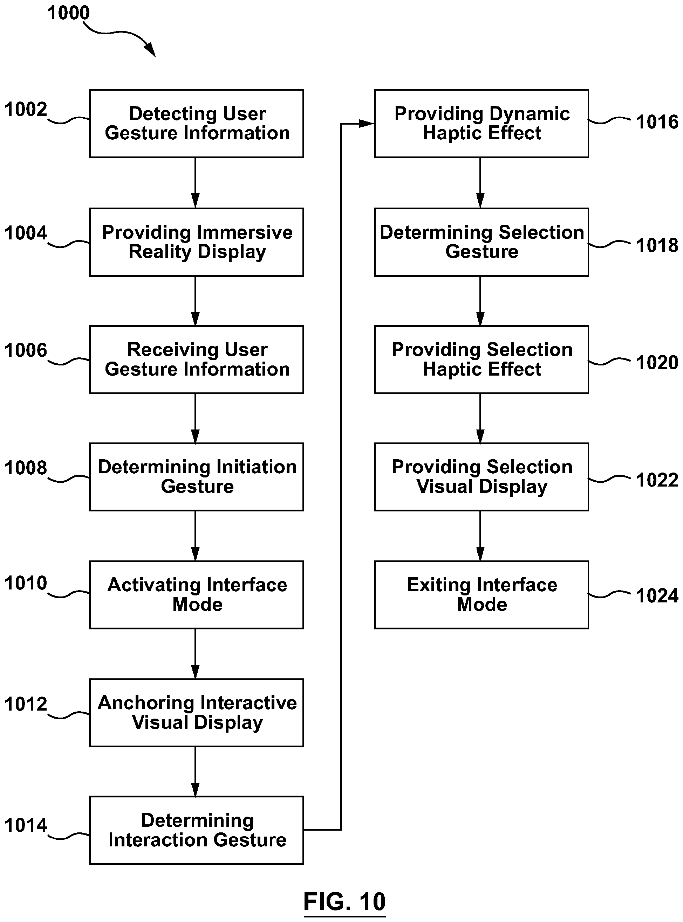

FIG. 10 is a process flow chart illustrating the implementation of an interface mode process 1000. The various processing operations and/or data flows depicted in FIG. 10 are described in greater detail herein. The described operations may be accomplished using some or all of the system components described in detail above and, in some implementations, various operations may be performed in different sequences and/or various operations may be omitted. Additional operations may be performed along with some or all of the operations shown in the depicted flow diagrams. One or more operations may be performed simultaneously. Accordingly, the operations as illustrated (and described in greater detail below) are exemplary by nature and, as such, should not be viewed as limiting.

In an operation 1002, the interface mode process 1000 includes detecting user gesture information by at least one sensor 131 of the gesture detection system 130. The user gesture information is then transmitted to the gesture determination module 142 of the computing unit 105. The gesture detection system 130 continues to detect user gesture information and transmit user gesture information to the gesture determination module 142 throughout the interface mode process 1000.

In an operation 1004, the interface mode process 1000 includes providing an immersive reality environment via an immersive reality display device 120. The display generation module 144 of the computing unit 105 transmits visual information to the immersive reality display device 120 for providing an immersive reality environment to the user.

In an operation 1006, the interface mode process 1000 includes receiving the user gesture information by the gesture determination module 142 of the computing unit 105. The gesture determination module 142 uses the user gesture information to determine an initiation gesture from the gesture information, at an operation 1008.

In an operation 1010, the interface mode process 1000 includes activating, by the interface generation module 148, an interface mode according to and in response to the initiation gesture determined at the operation 1008. The interface mode includes an interactive visual display provided via the immersive reality display device. The interactive visual display varies according to the interface mode that is activated.

In an operation 1012, the interface mode process 1000 includes anchoring the interactive visual display of the interface mode. The interactive visual display may be anchored according to a location of the initiation gesture, according to a location of a physical or virtual object within the immersive reality environment, and/or according to a specific location within a user's field of view.

In an operation 1014, the interface mode process 1000 includes determining an interaction gesture from the user gesture information by the gesture determination module 142. Information about the interaction gesture is provided by the gesture determination module 142 to the interface generation module 148, which, in turn coordinates actions of the effects generation module 146 and the display generation module 144. In response to the interaction gesture, the effects generation module 146 causes the haptic output device 110 to output a dynamic haptic effect at operation 1016. In response to the interaction gesture, the display generation module 144 adjusts the interactive visual display to show the interaction and navigational movements associated with the interaction gesture.

In an operation 1018, the interface mode process 1000 includes determining, by the gesture determination module 142, a selection gesture from the user gesture information. Information about the selection gesture is provided by the gesture determination module 142 to the interface generation module 148, which, coordinates actions of the effects generation module 146 and the display generation module 144. In response to the selection gesture, the effects generation module 146 causes the haptic output device 110 to provide a selection haptic effect via the haptic output device 110 at an operation 1020. In response to the selection gesture, the display generation module 144 adjusts the interactive visual display to provide a selection visual display associated with the selection gesture at an operation 1022.

In an operation 1024, the interface mode process 1000 includes exiting the interface mode by the interface generation module 148 of the computing unit 105. Upon exiting the interface mode, the interface generation module 148 reports any selections made by the user during the interface generation module 148 to the software application or applications associated with the selection. The interface generation module 148 also causes the display generation module 144 to cease display of the interactive visual display in the immersive environment.

The above describes an illustrative flow of an example interface mode generation and use process according to embodiments described herein. The process as illustrated in FIG. 10 is exemplary only, and variations exist without departing from the scope of the embodiments disclosed herein. The steps may be performed in a different order than that described, additional steps may be performed, and/or fewer steps may be performed. Although the steps are described as being performed by specific software modules, this description is also by way of example only. The steps may be performed by more or fewer software modules, each having differing capabilities and responsibilities than those described herein without departing from the embodiments described herein.

Several embodiments are specifically illustrated and/or described herein. However, it will be appreciated that modifications and variations of the disclosed embodiments are covered by the above teachings and within the purview of the appended claims without departing from the invention. For example, additional embodiments include at least the following.

Additional embodiment one is a system for providing haptic effects during an immersive reality interaction. The system of embodiment one includes at least one sensor configured to detect gesture information of a user; at least one haptic output device configured to provide a haptic effect to the user; an immersive reality display device; and at least one processor. The at least one processor is configured to receive the gesture information, determine an initiation gesture from the gesture information, activate an interface mode according to the initiation gesture, the interface mode including an interactive visual display provided via the immersive reality display device, anchor the interactive visual display according to a location of the initiation gesture, determine an interaction gesture from the gesture information, provide a dynamic haptic effect by the at least one haptic output device in response to the interaction gesture, determine a selection gesture from the gesture information, determine a selection haptic effect in response to the selection gesture, provide the selection haptic effect by the at least one haptic output device; and provide a selection visual display via the immersive reality display device.

Additional embodiment two is the system of embodiment one wherein the processor is further configured to anchor the interactive visual display in a fixed position within an immersive reality environment.

Additional embodiment three is the system of embodiment one wherein the processor is further configured to anchor the interactive visual display in a fixed position within the immersive reality display.

Additional embodiment four is the system of embodiment one wherein the processor is further configured to anchor the interactive visual display to an anchor object.

Additional embodiment five is the system of embodiment one wherein the processor is further configured to anchor the interactive visual display relative to a gesture entity.

Additional embodiment six is the system of any of embodiments one to five, wherein the processor is further configured to detect the interaction gesture as a movement of a gesture entity, the gesture entity including at least one of a hand or hands of the user and a peripheral device.

Additional embodiment seven is the system of embodiment six, wherein the processor is further configured to tune the dynamic haptic effect to provide a sensation that the gesture entity is being moved through a substance.

Additional embodiment eight is the system of any of embodiments one to seven, wherein the processor is further configured to increase at least one of a frequency and a magnitude of the dynamic haptic effect as a cursor nears a selectable object in the interface mode.

Additional embodiment nine is the system of any of embodiments one to eight, wherein the processor is further configured to detect the selection gesture as a release of the initiation gesture.

Additional embodiment ten is the system of any of embodiments one to nine, wherein the interactive visual display includes a plurality of layered visual display objects, each visual display object representing a selectable visual display object.

Additional embodiment eleven is the system of any of embodiments one to ten, wherein the processor is further configured to detect the initiation gesture as a rotation of a first gesture entity from an original position, provide the interactive visual display as a plurality of selectable visual display objects surrounding the first gesture entity, detect the interaction gesture as a movement of a second gesture entity into one of the plurality of selectable visual display objects, and detect the selection gesture as a return of the first gesture entity to the original position.

Additional embodiment twelve is the system of any of embodiments one to eleven, wherein the processor is further configured to detect the initiation gesture as a placement of an anchor finger of the user to the anchor object, provide the interactive visual display as a deck of stacked images atop the anchor object, detect the interaction gesture as a pivoting of the hand around the anchor finger, and rotate an image of the deck of stacked images in response to the interaction gesture.

Additional embodiment thirteen is the system of any of embodiments six to twelve, wherein the gesture entity comprises the hand of the user and the processor is further configured to detect the initiation gesture as a placement of a thumb on an index finger of the user, provide the interactive visual display as a linear row or column of selectable visual display objects, detect the interaction gesture as a sliding of the thumb across the index finger, provide the dynamic haptic effect as a cursor approaches a respective selectable visual display object, and provide the selection haptic effect as the cursor focuses on the respective selectable visual display object.

Additional embodiment fourteen is the system of any of embodiments six to twelve, wherein the gesture entity comprises the hand of the user and the processor is further configured to detect the initiation gesture as a placement of a thumb on an index finger of the user, provide the interactive visual display as a range selection visual display object providing a selection range, detect the interaction gesture as a sliding of the thumb along the index finger, change a selection value within the selection range in response to the interaction gesture; provide the dynamic haptic effect as the selection value within the selection range changes, and provide the selection haptic effect when the selection value reaches a limit of the selection range.

Additional embodiment fifteen is the system of any of embodiments one to fourteen, wherein the processor is further configured to provide a graspable visual display object in the interactive visual display, provide the dynamic haptic effect as a haptic effect of increasing intensity as a hand of the user approaches the graspable visual display object, and provide the selection haptic effect in response to the hand virtually contacting the graspable visual display object.

Additional embodiment sixteen is a computer-implemented method of providing haptic effects during an immersive reality interaction. The method of embodiment sixteen includes detecting gesture information of a user by at least one sensor; providing an immersive reality display via an immersive reality display device; receiving, by at least one processor, the gesture information; determining, by the at least one processor, an initiation gesture from the gesture information; activating, by the at least one processor, an interface mode according to the initiation gesture, the interface mode including an interactive visual display provided via the immersive reality display device, anchoring, by the at least one processor, the interactive visual display according to a location of the initiation gesture, determining, by the at least one processor, an interaction gesture from the gesture information; providing a dynamic haptic effect by at least one haptic output device in response to the interaction gesture; determining, by the at least one processor, a selection gesture from the gesture information; determining, by the at least one processor, a selection haptic effect in response to the selection gesture; providing the selection haptic effect by the at least one haptic output device; and providing a selection visual display via the immersive reality display device.

Additional embodiment seventeen is the method of embodiment sixteen, wherein anchoring includes anchoring the interactive visual display in a fixed position within an immersive reality environment.

Additional embodiment eighteen is the method of embodiment sixteen, wherein anchoring includes anchoring the interactive visual display in a fixed position within the immersive reality display.

Additional embodiment nineteen is the method of embodiment sixteen, wherein anchoring includes anchoring the interactive visual display to an anchor object.

Additional embodiment twenty is the method of embodiment sixteen, wherein anchoring includes anchoring the interactive visual display relative to a gesture entity.

Additional embodiment twenty-one is the method of any of embodiments sixteen to twenty, wherein the interaction gesture is detected as a movement of a gesture entity, the gesture entity including at least one of a hand or hands of the user and a peripheral device.

Additional embodiment twenty-two is the method of any of embodiments sixteen to twenty-one, further comprising tuning the dynamic haptic effect to provide a sensation that the gesture entity is being moved through a substance.

Additional embodiment twenty-three is the method of any of embodiments sixteen to twenty-two, further comprising increasing at least one of a frequency and a magnitude of the dynamic haptic effect as a cursor nears a selectable object in the interface mode.

Additional embodiment twenty-four is the method of any of embodiments sixteen to twenty-three, further comprising detecting the selection gesture as a release of the initiation gesture.

Additional embodiment twenty-five is the method of any of embodiments sixteen to twenty-four, wherein the interactive visual display includes a plurality of layered visual display objects, each visual display object representing a selectable visual display object.

Additional embodiment twenty-six is the method of any of embodiments sixteen to twenty-five, further comprising detecting the initiation gesture as a rotation of a first gesture entity from an original position; providing the interactive visual display as a plurality of selectable objects surrounding the first gesture entity; detecting the interaction gesture as a movement of a second gesture entity into one of the plurality of selectable objects; and detecting the selection gesture as a return of the first gesture entity to the original position.

Additional embodiment twenty-seven is the method of any of embodiments sixteen to twenty-six, further comprising detecting the initiation gesture as a placement of an anchor finger of the user to the anchor object; providing the interactive visual display as a deck of stacked selectable visual objects atop the anchor object; detecting the interaction gesture as a pivoting of the hand around the anchor finger; and rotating an image of the deck of stacked selectable visual objects in response to the interaction gesture.

Additional embodiment twenty-eight is the method of any of embodiments twenty to twenty-seven, wherein the gesture entity comprises the hand of the user and the method further comprises detecting the initiation gesture as a placement of a thumb on an index finger of the user; providing the interactive visual display as a linear row or column of selectable visual display objects; detecting the interaction gesture as a sliding of a user's thumb across the index finger; providing the dynamic haptic effect as a cursor approaches a respective selectable visual display object; and providing the selection haptic effect as a cursor focuses on the respective selectable visual display object.

Additional embodiment twenty-nine is the method of any of embodiments twenty to twenty-eight, wherein the gesture entity comprises a hand of the user and the method further comprises detecting the initiation gesture as a placement of a thumb on an index finger of the user; providing the interactive visual display as a range selection visual display object providing a selection range; detecting the interaction gesture as a sliding of a user's thumb across a user's index finger; changing a selection value within the selection range in response to the interaction gesture; providing the dynamic haptic effect as the selection value within the selection range changes; and providing the selection haptic effect when the selection value reaches a limit of the selection range.

Additional embodiment thirty is the method of any of embodiments sixteen to twenty-nine, providing a graspable visual display object in the interactive visual display; providing the dynamic haptic effect as an effect of altering the intensity as the user's hand approaches the graspable visual display object; and providing the selection haptic effect in response to the user's hand virtually contacting the graspable visual display object.

Thus, there are provided systems, devices, and methods for generating and using various interface modes within an immersive reality environment. While various embodiments according to the present invention have been described above, it should be understood that they have been presented by way of illustration and example only, and not limitation. It will be apparent to persons skilled in the relevant art that various changes in form and detail can be made therein without departing from the spirit and scope of the invention. Thus, the breadth and scope of the present invention should not be limited by any of the above-described exemplary embodiments. Further embodiments and combinations are set forth in the numbered paragraphs below. It will also be understood that each feature of each embodiment discussed herein, and of each reference cited herein, can be used in combination with the features of any other embodiment. The aspects of the above methods of rendering haptic effects may be used in any combination with other methods described herein or the methods can be used separately. All patents and publications discussed herein are incorporated by reference herein in their entirety.

## Claims

1. A system for providing haptic effects during an immersive reality interaction, the system comprising:
at least one sensor configured to detect gesture information of a user;
at least one haptic output device configured to provide a haptic effect to the user;
an immersive reality display device; and
at least one processor configured to
receive the gesture information,
determine an initiation gesture from the gesture information,
activate an interface mode according to the initiation gesture, the interface mode including an interactive visual display provided via the immersive reality display device,
anchor the interactive visual display according to a location of the initiation gesture,
determine an interaction gesture from the gesture information,
provide a dynamic haptic effect by the at least one haptic output device in response to the interaction gesture,
determine a selection gesture from the gesture information,
determine a selection haptic effect in response to the selection gesture,
provide the selection haptic effect by the at least one haptic output device; and
provide a selection visual display via the immersive reality display device.

2. The system of claim 1, wherein the processor is further configured to anchor the interactive visual display to an anchor object;
or
wherein the processor is further configured to anchor the interactive visual display to an anchor object and wherein the processor is further configured to
detect the initiation gesture as a placement of an anchor finger of the user to the anchor object,
provide the interactive visual display as a deck of stacked images atop the anchor object,
detect the interaction gesture as a pivoting of the hand around the anchor finger, and
rotate an image of the deck of stacked images in response to the interaction gesture.

3. The system of claim 1, wherein the processor is further configured to anchor the interactive visual display relative to a gesture entity;
or
wherein the processor is further configured to increase at least one of a frequency and a magnitude of the dynamic haptic effect as a cursor nears a selectable object in the interface mode;
or
wherein the processor is further configured to detect the selection gesture as a release of the initiation gesture.

4. The system of claim 1, wherein the processor is further configured to:
detect the interaction gesture as a movement of a gesture entity, the gesture entity including at least one of a hand or hands of the user and a peripheral device.

5. The system of claim 1, wherein the processor is further configured to
detect the initiation gesture as a rotation of a first gesture entity from an original position,
provide the interactive visual display as a plurality of selectable visual display objects surrounding the first gesture entity,
detect the interaction gesture as a movement of a second gesture entity into one of the plurality of selectable visual display objects, and
detect the selection gesture as a return of the first gesture entity to the original position.

6. The system of claim 4, wherein the gesture entity comprises the hand of the user and the processor is further configured to
detect the initiation gesture as a placement of a thumb on an index finger of the user, provide the interactive visual display as a linear row or column of selectable visual display objects,
detect the interaction gesture as a sliding of the thumb across the index finger, provide the dynamic haptic effect as a cursor approaches a respective selectable visual display object, and
provide the selection haptic effect as the cursor focuses on the respective selectable visual display object;
or
wherein the gesture entity comprises the hand of the user and the processor is further configured to
detect the initiation gesture as a placement of a thumb on an index finger of the user, provide the interactive visual display as a range selection visual display object providing a selection range,
detect the interaction gesture as a sliding of the thumb along the index finger,
change a selection value within the selection range in response to the interaction gesture;
provide the dynamic haptic effect as the selection value within the selection range changes, and
provide the selection haptic effect when the selection value reaches a limit of the selection range.

7. The system of claim 1, wherein the processor is further configured to
provide a graspable visual display object in the interactive visual display,
provide the dynamic haptic effect as a haptic effect of increasing intensity as a hand of the user approaches the graspable visual display object, and
provide the selection haptic effect in response to the hand virtually contacting the graspable visual display object.

8. A computer-implemented method of providing haptic effects during an immersive reality interaction, the method comprising:
detecting gesture information of a user by at least one sensor;
providing an immersive reality display via an immersive reality display device;
receiving, by at least one processor, the gesture information;
determining, by the at least one processor, an initiation gesture from the gesture information;
activating, by the at least one processor, an interface mode according to the initiation gesture, the interface mode including an interactive visual display provided via the immersive reality display device,
anchoring, by the at least one processor, the interactive visual display according to a location of the initiation gesture,
determining, by the at least one processor, an interaction gesture from the gesture information;
providing a dynamic haptic effect by at least one haptic output device in response to the interaction gesture;
determining, by the at least one processor, a selection gesture from the gesture information;
determining, by the at least one processor, a selection haptic effect in response to the selection gesture;
providing the selection haptic effect by the at least one haptic output device; and
providing a selection visual display via the immersive reality display device.

9. The method of claim 8, wherein anchoring includes anchoring the interactive visual display to an anchor object;
or
wherein anchoring includes anchoring the interactive visual display to an anchor object and further comprising:
detecting the initiation gesture as a placement of an anchor finger of the user to the anchor object;
providing the interactive visual display as deck of stacked selectable visual objects atop the anchor object;
detecting the interaction gesture as a pivoting of the hand around the anchor finger; and
rotating an image of the deck of stacked selectable visual objects in response to the interaction gesture.

10. The method of claim 8, further comprising
detecting the interaction gesture as a movement of a gesture entity, the gesture entity including at least one of a hand or hands of the user and a peripheral device.

11. The method of claim 8, wherein anchoring includes anchoring the interactive visual display relative to a gesture entity;
or
further comprising increasing at least one of a frequency and a magnitude of the dynamic haptic effect as a cursor nears a selectable object in the interface mode;
or
further comprising detecting the selection gesture as a release of the initiation gesture.

12. The method of claim 8, further comprising:
detecting the initiation gesture as a rotation of a first gesture entity from an original position;
providing the interactive visual display as a plurality of selectable objects surrounding the first gesture entity;
detecting the interaction gesture as a movement of a second gesture entity into one of the plurality of selectable objects; and
detecting the selection gesture as a return of the first gesture entity to the original position.

13. The method of claim 11, wherein the gesture entity comprises the hand of the user and the method further comprises
detecting the initiation gesture as a placement of a thumb on an index finger of the user;
providing the interactive visual display as a linear row or column of selectable visual display objects;
detecting the interaction gesture as a sliding of a user's thumb across the index finger;
providing the dynamic haptic effect as a cursor approaches a respective selectable visual display object; and
providing the selection haptic effect as a cursor focuses on the respective selectable visual display object;
or
wherein the gesture entity comprises a hand of the user and the method further comprises
detecting the initiation gesture as a placement of a thumb on an index finger of the user;
providing the interactive visual display as a range selection visual display object providing a selection range;
detecting the interaction gesture as a sliding of a user's thumb across a user's index finger;
changing a selection value within the selection range in response to the interaction gesture;
providing the dynamic haptic effect as the selection value within the selection range changes; and
providing the selection haptic effect when the selection value reaches a limit of the selection range.

14. The method of claim 8, further comprising:
providing a graspable visual display object in the interactive visual display;
providing the dynamic haptic effect as an effect of altering the intensity as the user's hand approaches the graspable visual display object; and
providing the selection haptic effect in response to the user's hand virtually contacting the graspable visual display object.

15. A computer-readable memory unit having software instructions stored thereon for carrying out the method of any of claims 8 to 14.
